# NEUE EUROPÄISCHE PATENTSCHRIFT

(11) **EP 2 819 815 B2**
(45) Veröffentlichungstag und Bekanntmachung des Hinweises auf die Entscheidung über den Einspruch: **26.06.2019**
(45) Hinweis auf die Patenterteilung: 25.05.2016
(21) Anmeldenummer: 13714301.2
(22) Anmeldetag: 05.04.2013
(51) Int. Cl.: B26D 7/26, B26D 1/00, B26D 3/28

(54) **SCHNITTSTELLE ZWISCHEN MESSER UND MESSERAUFNAHME**
INTERFACE BETWEEN A KNIFE AND A KNIFE MOUNT
INTERFACE ENTRE UN COUTEAU ET SON DISPOSITIF DE FIXATION

(30) Priorität: 05.04.2012 DE 102012007013
(43) Veröffentlichungstag der Anmeldung: 07.01.2015
(60) Teilanmeldung: 14191512.4
(73) Patentinhaber: Weber Maschinenbau GmbH Breidenbach, 35236 Breidenbach (DE)
(72) Erfinder: NISPEL, Thomas, 35232 Dautphetal (DE)
(74) Vertreter: Manitz Finsterwald Patent- und Rechtsanwaltspartnerschaft mbB
(86) Internationale Anmeldenummer: PCT/EP2013/057186
(87) Internationale Veröffentlichungsnummer: WO 2013/150133

(56) Entgegenhaltungen:
- EP-A2- 1 022 101
- WO-A2-2007/103899
- DE-A1-102008 020 293
- DE-A1-102009 032 974
- DE-U1-202007 010 399
- DE-U1-202009 017 954
- FR-A- 631 683
- US-A- 3 610 304

## Beschreibung

Die Erfindung betrifft ein Sichelmesser für Hochgeschwindigkeitsslicer nach dem Oberbegriff des Anspruchs 1, wie z.B. aus der DE 10 2008 020 293 A1 bekannt.

Die Erfindung betrifft ferner ein System mit einem solchen Messer und einer Messeraufnahme sowie einen Messerkopf mit einem solchen System.

Zur Befestigung eines Messers an einer Messeraufnahme wird das Messer herkömmlich meist mit der Messeraufnahme verschraubt. Dies gestaltet sich oftmals als schwierig, da das Messer dabei gleichzeitig gehalten werden muss. Für einen einzelnen Bediener ist es daher schwer möglich, ein Messer alleine, insbesondere ohne Hilfsmittel, an einer Messerhalterung anzubringen. Selbige Nachteile gelten entsprechend für die Demontage des Messers von der Messeraufnahme.

Dies ist insbesondere nachteilhaft, da beispielsweise stumpf gewordene Messer relativ häufig ausgewechselt werden müssen. Der Austausch gestaltet sich somit schwierig und zeitaufwändig.

Es ist eine Aufgabe der Erfindung, eine Schnittstelle zwischen einem Sichelmesser und einem Hochgeschwindigkeitsslicer zu schaffen, die es ermöglicht, das Messer einfach und sicher an einer Messeraufnahme anzubringen und von dieser wieder zu entfernen.

Die Aufgabe wird durch den Gegenstand des Anspruchs 1 gelöst. Die jeweils hier offenbarten Unteraspekte können miteinander kombiniert werden, und Schutz wird auch für derartige Kombinationen beansprucht.

Der Begriff "Messeraufnahme" soll gleichbedeutend mit den Begriffen "Messerhalterung" und "Messerhalter" verstanden werden.

Was die Montage des Messers, also dessen Anbringung an der Messeraufnahme, generell anbetrifft, gibt es im Grunde zwei Möglichkeiten.

Einerseits kann das Messer beispielsweise zunächst mit einer die Schneidkante umgebenden Handhabungsvorrichtung, die in diesem Fall auch als Blattschutz dient, versehen und zusammen mit diesem Blattschutz montiert werden.

Andererseits ist auch denkbar, die Handhabungsvorrichtung zur Anbringung eines Messers an einer Messeraufnahme eines Hochgeschwindigkeitsslicers als einen automatischen Wechsler oder zumindest als einen Teil eines automatischen Wechslers auszubilden. Ein derartiger Wechsler hält dazu das Messer, bewegt dieses zur Messeraufnahme und montiert dieses dort vollautomatisch. Der Wechsler kann nach Art eines Messermagazins zwei oder mehrere Plätze für Messer aufweisen, die wahlweise durch Verstellen des Wechslers an die Messeraufnahme herangeführt werden können, um automatisch ein auszutauschendes Messer an einem leeren Platz aufzunehmen und dann einen mit einem anzubringenden Messer besetzten Platz zur Messeraufnahme zu bewegen, um das Messer automatisch anzubringen.

Auch die Demontage kann entsprechend manuell oder automatisch erfolgen.

Die Erfindung betrifft ein Sichelmesser mit den Merkmalen des Anspruchs 1. In der nachfolgenden Offenbarung soll der Begriff "Messer" gleichbedeutend mit "Sichelmesser" verstanden werden.

Erfindungsgemäß kann dabei das Messer gegenüber der insbesondere stillstehenden Messeraufnahme verdreht werden, oder es kann umgekehrt das Messer von Hand oder durch geeignete Mittel gegen Verdrehen gehalten und die Messeraufnahme gegen das gehaltene Messer verdreht werden. Prinzipiell ist auch eine Ausführung denkbar, bei der sowohl das Messer als auch die Messeraufnahme verdreht werden. Wenn im Rahmen dieser Offenbarung von einem Verdrehen der Messeraufnahme die Rede ist, dann sind darunter auch Ausführungen zu verstehen, bei denen lediglich ein Teil der Messeraufnahme verdreht wird, beispielsweise ein nachstehend als "erster Teil" bezeichneter Teil, der auch als Befestigungsabschnitt bezeichnet wird.

Auf diese Weise sind beispielsweise zusätzliche Befestigungsmittel wie Schrauben nicht erforderlich. Auch der Einsatz von Werkzeugen ist nicht zwingend. Dies ermöglicht eine einfache Handhabung des Messers.

Somit kann beispielsweise auch ein einzelner Bediener oder ein automatischer Messerwechsler ein Messer an der Messeraufnahme montieren bzw. demontieren.

Vorzugsweise wird das Messer an der Messeraufnahme bezüglich der axialen Richtung verriegelt, indem das Messer, vorzugsweise entgegengesetzt zur Drehrichtung des Messers im Aufschneidebetrieb, verdreht wird. Das Messer ist somit auf der Messeraufnahme gesichert und kann sich nicht während des Aufschneidevorgangs lösen. Wie bereits erwähnt, kann alternativ oder zusätzlich die Messeraufnahme verdreht werden.

Gemäß einer Ausführungsform weist das Messer in einem eine Befestigungsöffnung des Messers begrenzenden Messerrandbereich die gleiche axiale Dicke auf wie in einem an den Messerrandbereich angrenzenden Messerinnenbereich, wobei insbesondere der Messerrandbereich an der Messerrückseite und/oder an der Messervorderseite bündig, insbesondere flächenbündig, in den Messerinnenbereich übergeht. Alternativ kann die axiale Dicke im Messerrandbereich geringer sein als im angrenzenden Messerinnenbereich, wobei insbesondere der Übergang zwischen Messerrandbereich und Messerinnenbereich nicht bündig erfolgt. Durch einen dünneren Messerrandbereich kann ein axialer Abstand an einer Messeraufnahme, auf den nachstehend näher eingegangen wird, kleiner sein als bei einem dickeren Messerrandbereich.

Durch eine gleichmäßige Dicke, d.h. bei gleicher Dicke von Messerrandbereich und Messerinnenbereich, kann das Messer insbesondere einfach und kostengünstig hergestellt werden. So wird beispielsweise lediglich eine Befestigungsöffnung aus dem Messer, zum Beispiel mittels eines Lasers, ausgeschnitten.

Durch eine gleichmäßige Dicke tritt auch keine zusätzliche unerwünschte Unwucht des Messers auf, welche gegebenenfalls ausgeglichen werden müsste.

Der Messerrandbereich kann beispielsweise die Form einer Ellipse oder eines Vielecks haben. Insbesondere verläuft der Messerrandbereich mäanderförmig. Die Messervorsprünge können beispielsweise als abgerundete Laschen oder Zungen ausgebildet sein. Es ist jedoch auch denkbar, diese beispielsweise eckig und/oder spitz zu gestalten.

Gemäß einer weiteren Ausführungsform ist das Messer über einen Bajonettverschluss mit der Messeraufnahme verriegelbar. Durch den Bajonettverschluss wird das Messer sicher an der Messeraufnahme befestigt und insbesondere vor einem ungewünschten Lösen gesichert.

Bevorzugt begrenzt der Messerrandbereich eine Befestigungsöffnung des Messers und ist als Bestandteil des Bajonettverschlusses ausgebildet. Insbesondere verläuft der Messerrandbereich hierbei mäanderförmig. Das Messer selbst bildet also einen Teil des Bajonettverschlusses. Zusätzliche Verschlüsse sind nicht notwendig, jedoch gleichwohl denkbar.

Nach einer weiteren Ausführungsform sind die radial nach innen gerichtete Messervorsprünge des eine Befestigungsöffnung des Messers begrenzenden Messerrandbereichs als Bestandteil des Bajonettverschlusses ausgebildet. Insbesondere sind hierbei mindestens zwei Messervorsprünge vorgesehen, um das Messer ausreichend zu sichern.

Gemäß einer weiteren Ausführungsform weist das Messer einen messerseitigen Bestandteil einer Verdrehsicherung auf, wobei insbesondere der Bestandteil eine Aussparung umfasst, bevorzugt eine sich in Umfangsrichtung erstreckende Aussparung mit zwei Endabschnitten. Es können auch mehrere Aussparungen vorgesehen sein. Die Aussparung kann sich beispielsweise abseits des Messerrandbereichs im Messer befinden. Dazu kann die Aussparung z.B. in das Messer gefräst oder ausgeschnitten werden. Alternativ zu den Aussparungen sind beispielsweise auch Stifte denkbar, welche einen Teil einer Verdrehsicherung bilden.

Nach einer weiteren Ausführungsform ist die Aussparung zwischen zwei in Umfangsrichtung aufeinanderfolgenden, radial nach innen gerichteten Vorsprüngen des Messerrandbereichs angeordnet. Es ist auch denkbar, zwischen mehreren Vorsprüngen des Messerrandbereichs eine Aussparung anzuordnen.

Die Vorsprünge des Messerrandbereichs erfüllen somit eine Doppelfunktion, da sie einen Bestandteil eines Bajonettverschlusses und zugleich einen Bestandteil einer Verdrehsicherung darstellen.

Erfindungsgemäß ist der eine Befestigungsöffnung des Messers begrenzende Messerrandbereich als Bestandteil einer Anbringhilfe ausgebildet. Der Messerrandbereich weist dabei zumindest eine, bevorzugt genau eine, Asymmetrie auf, an welcher der Messerrandbereich von einem regelmäßigen Verlauf abweicht. Auf diese Weise ist eine Positionierung des Messers an einer Messeraufnahme bevorzugt an genau einer einzigen Stelle möglich. Zusätzliche Markierungen und/oder Öffnungen, in die beispielsweise Positionierstifte einer Messeraufnahme an einer bestimmten Position eingreifen, sind somit nicht erforderlich, jedoch gleichwohl zusätzlich denkbar.

Nach einer weiteren Ausführungsform ist die Asymmetrie von einem radial nach innen gerichteten Messervorsprung gebildet, der sich hinsichtlich seiner Form und/oder Größe von den anderen radial nach innen gerichteten Messervorsprüngen des Messerrandbereiches unterscheidet. Es ist auch denkbar, dass alternativ oder zusätzlich eine Messervertiefung zwischen den Vorsprüngen eine Asymmetrie aufweist. Es sind auch mehrere asymmetrische Messervorsprünge und/oder Messervertiefungen denkbar. Ein asymmetrischer Messervorsprung und/oder eine asymmetrische Messervertiefung kann beispielsweise eine andere Breite und/oder Länge als die anderen Messervorsprünge bzw. Messervertiefungen haben. Bevorzugt wird die Asymmetrie durch einen im Vergleich zu den anderen Messervorsprüngen breiteren Messervorsprung gebildet.

Generell kann die Asymmetrie durch eine unregelmäßige Größe, insbesondere Breite und/oder Höhe, mehrerer Messervorsprünge und/oder Messervertiefungen gebildet werden.

Nach einer weiteren Ausführungsform weist eine Befestigungsöffnung des Messers eine kreisförmige Grundform auf, wobei die Mittelachse der Befestigungsöffnung mit einer Drehachse des Messers zusammenfällt. Bevorzugt entspricht die Form der Messervertiefungen dieser kreisförmigen Grundform. Das Drehzentrum des Messers ist somit nicht radial versetzt, so dass kein exzentrischer Versatz stattfindet.

Gemäß einer weiteren Ausführungsform beträgt der Radius einer Befestigungsöffnung des Messers wenigstens 1/10, insbesondere wenigstens 1/9, 1/8, 1/7, 1/6, 1/5, 1/4, 1/3, 1/2, 2/3, 3/4 oder 4/5, des größten Radius des Messers. Alternativ oder zusätzlich beträgt die Größe der Befestigungsöffnung wenigstens 1/6, insbesondere wenigstens 1/5, 1/4, 1/3, 1/2, 2/3, 3/4 oder 4/5, der Gesamtfläche des Messers. Die Befestigungsöffnung ist somit verhältnismäßig groß, insbesondere größer als eine Öffnung, wie sie beispielsweise für eine herkömmliche Befestigung mit Hilfe von Schrauben benötigt wird. Durch die große Befestigungsöffnung werden Materialkosten gespart. Zudem wird das Gewicht des Messers reduziert. Es muss somit beim Anfahren weniger Gewicht als bei herkömmlichen Messern beschleunigt werden. Auch axial wirkende Kräfte werden durch die große Befestigungsöffnung besser beispielsweise auf die radial nach innen gerichteten Messervorsprünge verteilt.

Offenbart wird ferner eine Messeraufnahme für Hochgeschwindigkeitsslicer, die so ausgebildet ist, dass ein erfindungsgemäßes Messer derart angebracht werden kann, dass das Messer zunächst in axialer Richtung auf die Messeraufnahme aufgesetzt und anschließend durch Verdrehen - entweder des Messers relativ zur Messeraufnahme und/oder der Messeraufnahme relativ zum Messer - an der Messeraufnahme bezüglich der axialen Richtung verriegelt wird, wobei insbesondere die Messeraufnahme einen Befestigungsabschnitt für die Befestigungsöffnung des Messers aufweist, der von einem Aufnahmerandbereich begrenzt ist.

Das Messer wird somit mit Hilfe der Messeraufnahme gesichert. Eine axiale Bewegung des Messers wird somit im verriegelten Zustand verhindert.

Gemäß einer weiteren Ausführungsform ist ein einen Befestigungsabschnitt der Messeraufnahme begrenzender Aufnahmerandbereich zumindest bereichsweise, insbesondere zumindest im Wesentlichen über seinen gesamten Umfang, komplementär zu dem Messerrandbereich ausgebildet. Der Aufnahmerandbereich stellt also gewissermaßen ein "Positiv" zu einem "Negativ" in Form des Messerrandbereichs dar. Das Messer kann somit exakt auf der Messeraufnahme angebracht werden.

Nach einer weiteren Ausführungsform umfasst ein einen Befestigungsabschnitt der Messeraufnahme begrenzender Aufnahmerandbereich eine Mehrzahl von in Umfangsrichtung beabstandet angeordneten, radial nach außen gerichteten Aufnahmevorsprüngen. Die Aufnahmevorsprünge sind insbesondere komplementär zu den Messervertiefungen geformt. Das Messer kann somit durch die Messervertiefungen über den Aufnahmerandbereich geschoben werden.

Zudem kann ein einen Befestigungsabschnitt der Messeraufnahme begrenzender Aufnahmerandbereich zwischen den Aufnahmevorsprüngen Aufnahmevertiefungen aufweisen. Die Aufnahmevertiefungen sind insbesondere komplementär zu den Messervorsprüngen geformt.

Nach einer weiteren Ausführungsform weicht ein einen Befestigungsabschnitt der Messeraufnahme begrenzender Aufnahmerandbereich von einer Kreisform ab und ist als Bestandteil eines Bajonettverschlusses zwischen der Messeraufnahme und dem Messer ausgebildet. Das Messer kann somit sicher auf der Messeraufnahme angebracht werden. Ein zusätzlicher Verschluss ist zwar denkbar, jedoch nicht unbedingt notwendig.

Gemäß einer weiteren Ausführungsform weist die Messeraufnahme einen aufnahmeseitigen Bestandteil einer Verdrehsicherung für das Messer auf, wobei insbesondere der Bestandteil zumindest einen Sicherungsstift umfasst, insbesondere zwei in Umfangsrichtung beabstandete Sicherungsstifte. Alternativ ist auch denkbar, die Sicherungsstifte beispielsweise am Messer anzubringen. In diesem Fall weist die Messeraufnahme Vertiefungen für die Sicherungsstifte auf.

Bevorzugt ist zumindest ein Sicherungsstift beim Anbringen des Messers mittels des Messers gegen eine Rückstellkraft versenkbar. Das Messer wird somit auf die Messeraufnahme aufgesetzt. Ein Sicherungsstift wird hierbei nach unten gedrückt. Nach einem Verdrehen des Messers und/ oder der Messeraufnahme rastet dieser Sicherungsstift in eine Aussparung ein und sichert somit das Messer vor einem Verdrehen. Alternativ sind auch mehrere Sicherungsstifte denkbar, die an verschiedenen Stellen der Messeraufnahme angeordnet sein können. Die Rückstellkraft der Sicherungsstifte wird beispielsweise über Federn zur Verfügung gestellt.

Nach einer weiteren Ausführungsform ist die Verdrehsicherung an einer radial außerhalb eines einen Befestigungsabschnitt der Messeraufnahme begrenzenden Aufnahmerandbereichs gelegenen Anlagefläche für das Messer angeordnet oder ausgebildet. Dies ist konstruktionstechnisch besonders günstig. Die Drehsicherung am Aufnahmerandbereich anzubringen, wäre gleichwohl ebenso denkbar.

Gemäß einer weiteren Ausführungsform weist die Messeraufnahme einen Anlageabschnitt mit einer Anlagefläche für das Messer auf, die in axialer Richtung gegenüber einem einen Befestigungsabschnitt der Messeraufnahme begrenzenden Aufnahmerandbereich zurückgesetzt ist, wobei insbesondere zwischen einer durch die Anlagefläche definierten Anlageebene und einer Verriegelungsebene, die durch die in Richtung der Anlageebene weisende Rückseite des Aufnahmerandbereichs definiert ist, ein axialer Abstand vorhanden ist, wobei insbesondere der axiale Abstand veränderbar ist. Die Messeraufnahme ist somit nicht statisch. Einzelne Bestandteile der Messeraufnahme können gegeneinander in axialer Richtung bewegt werden. Eine derartige Bewegbarkeit kann für eine oder mehrere Zusatzfunktionen und z.B. für eine Spann- oder Klemmeinrichtung für das Messer genutzt werden.

Die Erfindung betrifft zudem ein System nach Anspruch 12 mit einem erfindungsgemäßen Messer und einer Messeraufnahme, z.B. wie vorstehend beschrieben.

Gemäß einer Ausführungsform weist ein Aufnahmerandbereich der Messeraufnahme eine größere axiale Dicke auf als der Messerrandbereich des Messers. Dies gewährleistet unter anderem eine hohe Stabilität des Messerrandbereichs und der Messeraufnahme insgesamt.

Nach einer weiteren Ausführungsform sind der Messerrandbereich des Messers und ein Aufnahmerandbereich der Messeraufnahme derart aufeinander abgestimmt, dass beim Aufsetzen des Messers ein relatives Verdrehen von Messer und Messeraufnahme unterbunden ist, bis der Messerrandbereich den Aufnahmerandbereich passiert hat. Das Messer wird somit aufgesetzt und insbesondere über den vergleichsweise dicken Aufnahmerandbereich bewegt. Die Form des Aufnahmerandbereichs und die Form des Messerrandbereichs sind insbesondere komplementär zueinander, so dass ein Verdrehen während des Aufsetzens nicht möglich ist. Das Messer gelangt somit in einer eindeutigen Winkelposition zur Anlagefläche.

Gemäß einer weiteren Ausführungsform ist ein axialer Abstand zwischen einer Anlageebene und einer Verriegelungsebene der Messeraufnahme zumindest in einem Freigabezustand der Messeraufnahme größer als die axiale Dicke des die Befestigungsöffnung begrenzenden Messerrandbereiches. Auf diese Weise kann gewährleistet werden, dass im Freigabezustand das Messer auf der Messeraufnahme verdreht werden kann - entweder durch Verdrehen des Messers relativ zur Messeraufnahme und/oder durch Verdrehen der Messeraufnahme relativ zum Messer. Es ist somit ein gewisser "Spielraum" vorhanden. Der axiale Abstand zwischen der Anlageebene und der Verriegelungsebene der Messeraufnahme kann - wie vorstehend erwähnt - umso kleiner sein, je dünner der Messerrandbereich ausgeführt ist.

In einer bevorzugten Ausführungsform ist der axiale Abstand kleiner als 1 mm. Insbesondere ist dieser kleiner als 0,5 mm, bevorzugt kleiner als 0,3 mm und vorzugsweise kleiner als 0,1 mm. Der "Spielraum" des Messers ist somit relativ gering, jedoch ausreichend, um Messer und Messeraufnahme gegeneinander verdrehen zu können.

Offenbart wird ferner als weitere Ausführungsform eine Messeraufnahme für Hochgeschwindigkeitsslicer, insbesondere wie vorstehend beschrieben, mit einer Klemmeinrichtung für ein erfindungsgemäßes Messer. Die Klemmeinrichtung kann zwischen einem Freigabezustand und einem Klemmzustand verstellt werden. Das Messer ist im Klemmzustand zwischen einem ersten Teil und einem zweiten Teil der Messeraufnahme eingeklemmt. Das Messer und die Messeraufnahme können im Freigabezustand insbesondere gegeneinander verdreht werden. Im Klemmzustand ist hingegen eine Verdrehung von Messer und Messeraufnahme relativ zueinander nicht möglich.

Gemäß einer weiteren Ausführungsform ist der erste Teil von einem Bestandteil eines Bajonettverschlusses zur Verriegelung des Messers an der Messeraufnahme gebildet. Der erste Teil erfüllt somit eine Doppelfunktion, da er das Messer einerseits an der Messeraufnahme verriegelt und andererseits das Messer zusätzlich klemmen kann.

Nach einer weiteren Ausführungsform ist der erste Teil von einem Befestigungsabschnitt für eine Befestigungsöffnung des Messers gebildet, insbesondere von einem den Befestigungsabschnitt begrenzenden Aufnahmerandbereich. Der erste Teil kann somit eine weitere Funktion erfüllen. Ein zusätzliches Bauteil für die Befestigung des Messers ist somit nicht unbedingt notwendig, gleichwohl jedoch denkbar.

Nach einer weiteren Ausführungsform ist der erste Teil von einer Mehrzahl von in Umfangsrichtung beabstandet angeordneten, radial nach außen gerichteten Aufnahmevorsprüngen gebildet. Der erste Teil weist insbesondere Laschen auf, die komplementär zu Messervertiefungen ausgebildet sind. Auf diese Weise kann das Messer positionsgenau aufgenommen werden.

Nach einer weiteren Ausführungsform ist der zweite Teil von einem Anlageabschnitt für das Messer gebildet. Das Messer wird somit insbesondere zwischen Aufnahmevorsprüngen und einem Anlageabschnitt eingeklemmt. Der Anlageabschnitt ist beispielsweise als kreisförmige Platte oder Kreisring ausgebildet.

Nach einer weiteren Ausführungsform umfasst die Klemmeinrichtung eine Federanordnung, die zwischen dem ersten Teil und dem zweiten Teil wirksam ist und insbesondere unter Vorspannung steht.

Bevorzugt ist die Klemmeinrichtung in den Klemmzustand vorgespannt. Befindet sich das Messer somit zwischen dem ersten und dem zweiten Teil, so ist dieses zwischen diesen Teilen eingeklemmt. Ein unbeabsichtigtes Lösen des Messers wird somit verhindert. Die Vorspannung muss insbesondere aktiv überwunden werden, um das Messer von der Messeraufnahme zu entfernen.

Nach einer weiteren Ausführungsform umfasst die Klemmeinrichtung zumindest eine Tellerfeder und/oder zumindest ein Tellerfederpaket. Eine Tellerfeder hat den Vorteil, dass die Spannung der Feder gleichmäßig und/oder über den gesamten Umfang auf das Messer verteilt wird. Insbesondere kann die Tellerfeder mittelbar oder unmittelbar auf Messervorsprünge drücken.

Nach einer weiteren Ausführungsform ist für die Klemmeinrichtung eine Betätigungseinrichtung vorgesehen, mittels welcher die Klemmeinrichtung zwischen dem Freigabezustand und dem Klemmzustand verstellbar ist. Insbesondere ist die Klemmeinrichtung in den Klemmzustand vorgespannt und eine Betätigungseinrichtung vorgesehen, die derart ausgebildet ist, dass die Klemmeinrichtung bei Betätigung der Betätigungseinrichtung gegen die Wirkung der Vorspannung vom Klemmzustand in den Freigabezustand wechselt.

Um das Messer lösen zu können, muss somit aktiv eine Klemmeinrichtung überwunden werden. Im Freigabezustand kann das Messer anschließend wieder verdreht und beispielsweise abgenommen werden.

Nach einer weiteren Ausführungsform ist die Klemmeinrichtung durch Aufsetzen des Messers verstellbar, insbesondere durch Bewegen des Messers oder einer Handhabungsvorrichtung für das Messer relativ zur Messeraufnahme. Durch das Aufsetzen des Messers wird also insbesondere die Betätigungseinrichtung betätigt. Alternativ sind auch Betätigungseinrichtungen denkbar, welche nicht mit dem Aufsetzen des Messers in unmittelbarem Zusammenhang stehen. Denkbar wäre beispielsweise ein Knopf, ein Hand- oder Fußschalter oder ein Hebel bzw. eine Computersteuerung, womit die Betätigungseinrichtung betätigt werden kann. Insbesondere kann eine manuelle Betätigung vorgesehen sein, die eine aktive bewusste Handlung eines Bedieners erfordert.

Nach einer weiteren Ausführungsform ist die Betätigungseinrichtung derart ausgebildet, dass die Klemmeinrichtung bei Betätigung der Betätigungseinrichtung gegen die Wirkung einer Vorspannung vom Klemmzustand in den Freigabezustand wechselt. Durch die Betätigungseinrichtung wird insbesondere der Druck einer Feder überwunden. Um das Messer lösen zu können, muss somit aktiv mit Hilfe der Betätigungseinrichtung die Vorspannung überwunden werden. Ein ungewolltes Lösen des Messers wird somit verhindert.

Nach einer weiteren Ausführungsform umfasst die Betätigungseinrichtung eine Pneumatik-, Hydraulik- oder Elektroeinrichtung.

Bevorzugt setzt die Betätigungseinrichtung bei Betätigung einen abgeschlossenen Innenraum der Messeraufnahme unter Druck. Dazu wird insbesondere Druckluft verwendet. Die Druckluft kann beispielsweise vom Inneren der Messeraufnahme zugeführt werden, also insbesondere über den zweiten Teil. Es ist auch denkbar, die Druckluft von vorne, also beispielsweise über den ersten Teil, der Messeraufnahme zuzuführen. Alternativ ist auch eine externe Zufuhr von Druckluft denkbar, beispielsweise über eine Handhabungsvorrichtung, insbesondere einen manuellen Träger mit Blattschutz oder einen automatischen Messerwechsler, z.B. wie er vorstehend erläutert ist.

Entweicht Druckluft beispielsweise ungewollt aus dem Innenraum, so wird das Messer automatisch eingeklemmt. Dies stellt einen großen Sicherheitsgewinn dar.

Nach einer weiteren Ausführungsform ist der Innenraum von wenigstens zwei zum Verstellen der Klemmeinrichtung relativ zueinander bewegbaren, mit den ersten und zweiten Teilen verbundenen oder identischen Abschnitten der Messeraufnahme begrenzt, wobei insbesondere die beiden Abschnitte durch eine Membranhaut miteinander verbunden sind, welche nach Art eines Filmscharniers beweglich ausgebildet ist. Durch die Membranhaut wird insbesondere eine relative Beweglichkeit der ansonsten im Wesentlichen starren ersten und zweiten Abschnitte ermöglicht. Insbesondere kann mittels des Filmscharniers ein zwar einstückiges, gleichzeitig aber in sich bewegbares Ganzes realisiert werden. Gleichzeitig gewährleistet die Membranhaut, dass der Innenraum abgeschlossen bleibt und die zugeführte Druckluft nicht entweichen kann. Die Membranhaut bildet also gewissermaßen ein Gelenk. Die Membranhaut kann beispielsweise ein Gummimaterial umfassen, alternativ aber von einem dünnen Metallstreifen gebildet werden, der mit den beiden Abschnitten einstückig verbunden oder ausgebildet ist.

Nach einer weiteren Ausführungsform ist in dem Innenraum eine Federanordnung der Klemmeinrichtung angeordnet, die zwischen den beiden relativ zueinander bewegbaren Abschnitten wirksam ist. Wird nun beispielsweise Druckluft in den Innenraum zugeführt, entfernen sich der erste und der zweite Abschnitt voneinander. Dadurch wird auch die Federanordnung, welche sowohl mit dem ersten als auch mit dem zweiten Abschnitt verbunden ist, weiter gespannt. Auf diese Weise wird das Messer freigegeben.

Alternativ oder zusätzlich zu einer Pneumatik-, Hydraulik- oder Elektroeinrichtung umfasst die Betätigungseinrichtung ein mechanisches Spannelement, insbesondere eine Schraube. Dieses ist insbesondere zwischen dem ersten Teil und dem zweiten Teil wirksam. Das Spannelement ist beispielsweise zentral an der Messeraufnahme angeordnet. Wird das Spannelement beispielsweise vom ersten Abschnitt zum zweiten Abschnitt hin bewegt, so drückt dieses zentral auf eine Tellerfeder, wodurch die Endbereiche der Tellerfeder nach oben bewegt werden. Das Messer wird somit aus seinem Klemmzustand gelöst.

Gemäß einer weiteren Ausführungsform klemmt die Klemmeinrichtung das Messer an den Messerrandbereich ein, der eine zentrale Befestigungsöffnung des Messers begrenzt, insbesondere an einer Mehrzahl von radial nach innen gerichteten Messervorsprüngen des Messerrandbereichs. Insbesondere drückt somit eine Tellerfeder mittelbar oder unmittelbar auf den Messerrandbereich oder auf die Messervorsprünge des Messerrandbereiches.

Offenbart wird ferner eine Handhabungsvorrichtung zur Anbringung eines Messers an einer Messeraufnahme eines Hochleistungsslicers. Diese Handhabungsvorrichtung kann beispielsweise ein mit der Hand zu tragender bzw. zu haltender Messerträger mit Blattschutz sein. Die Handhabungsvorrichtung kann jedoch auch Bestandteil eines automatischen Wechslers sein oder den automatischen Wechsler selbst darstellen, welcher ein Messer vollautomatisch montieren und demontieren kann. Bei einem automatischen Wechsler ist somit kein Bediener notwendig, der das Messer per Hand auf eine Messeraufnahme aufsetzt bzw. von Hand von der Messeraufnahme entfernt.

Die Handhabungsvorrichtung kann dazu ausgebildet sein, zusätzlich zum Halten des Messers wenigstens eine Zusatzfunktion zu erfüllen.

Um ein Messer auf einer Messeraufnahme zu montieren bzw. um das Messer zu demontieren, kann das Messer mit einer als simpler Träger ausgebildeten Handhabungsvorrichtung gehalten werden. Ist die Handhabungsvorrichtung mit einem Blattschutz versehen, so sind insbesondere Haltegriffe vorgesehen. Das Messer ist somit auch von einem einzigen Bediener gut handhabbar und tragbar. Im Stand der Technik diente ein derartiger Träger lediglich dem Halten des Messers beim Anbringen und Abnehmen.

Hier liegt die Idee zugrunde, dass diese Handhabungsvorrichtung zusätzlich zum Halten des Messers wenigstens eine weitere Funktion erfüllen kann.

Gemäß einer Ausführungsform besteht die Zusatzfunktion in dem Lösen einer Verdrehsicherung, insbesondere zumindest eines Sicherungsstifts, die das Messer an der Messeraufnahme sichert. Dazu kann in der Handhabungsvorrichtung beispielsweise ein Stempel oder ein anderes Betätigungsorgan vorgesehen sein. Wird die Handhabungsvorrichtung zum Abnehmen des Messers von der Messeraufnahme nun an dem Messer angebracht, so beaufschlagt der Stempel bzw. das Betätigungsorgan der Handhabungsvorrichtung den insbesondere vorgespannten Sicherungsstift der Verdrehsicherung. Da die Handhabungsvorrichtung und das Messer drehfest miteinander verbunden sind, kann nun das Messer verdreht werden. Die Verdrehsicherung wird auf diese Weise durch die Handhabungsvorrichtung gelöst. Durch diese Doppelfunktion der Handhabungsvorrichtung sind keine weiteren Schritte bzw. Vorrichtungen zum Lösen der Verdrehsicherung notwendig.

Nach einer weiteren Ausführungsform besteht die Zusatzfunktion in dem Verstellen einer Klemmeinrichtung der Messeraufnahme zwischen einem das Messer einklemmenden Klemmzustand und einem Freigabezustand. Die Handhabungsvorrichtung dient somit beispielsweise als Betätigungseinrichtung. Eine zusätzliche, beispielsweise externe, Betätigungseinrichtung ist somit nicht erforderlich.

Gemäß einer weiteren Ausführungsform besteht die Zusatzfunktion in dem Speichern von Energie, insbesondere von Strom oder eines unter Druck stehenden Fluids, wobei insbesondere die Handhabungsvorrichtung einen wiederaufladbaren Energiespeicher umfasst. Die Handhabungsvorrichtung kann somit beispielsweise einen mit Druckluft gefüllten Drucktank enthalten. Insbesondere als Rohre ausgebildete Griffe bzw. Verstärkungen von aus dem Stand der Technik bekannten Messerträgern können relativ leicht zu einem Drucktank umfunktioniert werden, so dass sich ohnehin vorhandenes Volumen zusätzlich nutzen lässt.

Nach einer weiteren Ausführungsform besteht die Zusatzfunktion in der Abgabe von, insbesondere gespeicherter, Energie an die Messeraufnahme. Zum Betätigen der Betätigungseinrichtung wird somit beispielsweise Druckluft, welche in der Handhabungsvorrichtung gespeichert sein kann, an die Messeraufnahme abgegeben. Alternativ ist auch denkbar, dass das unter Druck stehende Fluid über eine Leitung der Handhabungsvorrichtung zugeführt wird. Es ist auch denkbar, dass, beispielsweise über eine Stromleitung, Energie zunächst der Handhabungsvorrichtung zugeführt und von dieser anschließend an die Messeraufnahme abgegeben wird. Ein Energiespeicher in der Handhabungsvorrichtung ist somit nicht zwingend erforderlich. Alternativ oder zusätzlich ist auch denkbar, dass die Betätigungseinrichtung mit Hilfe von Magneten, welche in der Handhabungsvorrichtung angeordnet sind, oder auf andere Art und Weise berührungslos betätigt wird.

Nach einer weiteren Ausführungsform umfasst die Handhabungsvorrichtung einen Kopplungsabschnitt für die Messeraufnahme, über den, insbesondere gespeicherte, Energie an die Messeraufnahme abgebbar ist. Der Kopplungsabschnitt ist insbesondere nach außen abgedichtet, so dass kein unter Druck stehendes Fluid entweichen kann.

Offenbart wird ferner ein System mit einem, insbesondere erfindungsgemäßen, Messer und einer Messeraufnahme sowie einer Handhabungsvorrichtung, wobei die Handhabungsvorrichtung beim Anbringen und/oder beim Abnehmen des Messers automatisch ein Verstellen einer Klemmeinrichtung der Messeraufnahme zwischen einem Klemmzustand und einem Freigabezustand veranlasst. Wird das Messer also beispielsweise mit der Handhabungsvorrichtung auf die Messeraufnahme aufgesetzt, so wird die Betätigungseinrichtung betätigt, indem beispielsweise Druckluft von der Handhabungsvorrichtung in die Messeraufnahme abgegeben wird. Dadurch wird ein Freigabezustand erreicht, in dem das Messer und die Messeraufnahme gegeneinander verdreht werden können. Wird die Druckluft wieder aus dem Innenraum abgelassen, wird das Messer eingeklemmt. Zum Entfernen des Messers muss also abermals beispielsweise ein unter Druck stehendes Fluid zugeführt werden, um den Klemmzustand zu lösen.

Nach einer weiteren Ausführungsform umfassen die Handhabungsvorrichtung und die Messeraufnahme jeweils einen Kopplungsabschnitt, wobei die Kopplungsabschnitte derart ausgebildet und angeordnet sind, dass beim Aufsetzen des Messers die beiden Kopplungsabschnitte in Wirkeingriff miteinander gelangen und gespeicherte Energie und/oder Steuersignale über die Kopplungsabschnitte übertragbar sind. Es wird also beispielsweise ein Stromkontakt hergestellt. Alternativ oder zusätzlich liegen beim Aufsetzen des Messers beispielsweise zwei Abschnitte einer Fluidleitung für ein unter Druck stehendes Fluid derart übereinander, dass das unter Druck stehende Fluid von einem Abschnitt in den anderen Abschnitt geleitet werden kann.

Offenbart wird ferner ein Messerkopf eines Hochleistungsslicers oder ein Hochleistungsslicer, der zumindest ein Sichelmesser, zumindest eine Messeraufnahme und zumindest ein Gegengewicht zur Einstellung der Massenverteilung, insbesondere zur Auswuchtung, der das Messer und die Messeraufnahme umfassenden, im Betrieb rotierenden Anordnung, umfasst, wobei das Gegengewicht zumindest teilweise in die Messeraufnahme integriert ist. Auf diese Weise ist kein separates Gegengewicht notwendig. Insbesondere entfällt ein umständliches Anbringen eines Gegengewichts an der Außenseite des Messers nach dessen Anbringung an der Messeraufnahme.

Nach einer weiteren Ausführungsform ist das Gegengewicht auf beiden Seiten einer Messerebene angeordnet. Insbesondere können dadurch dynamische Unwuchten ausgeglichen werden.

Nach einer weiteren Ausführungsform umfasst die Messeraufnahme einen Träger für das Messer und einen relativ zum Träger bewegbaren Funktionsabschnitt, wobei das Gegengewicht auf den Träger und den Funktionsabschnitt aufgeteilt ist.

Nach einer weiteren Ausführungsform ist der Funktionsabschnitt ein Bestandteil eines Befestigungsabschnitts zur Anbringung des Messers und/oder einer Klemmeinrichtung zum Einklemmen des Messers. Der Funktionsabschnitt kann beispielsweise auch ein Bestandteil eines Bajonettverschlusses sein. Der Funktionsabschnitt bzw. der am Funktionsabschnitt vorgesehene Teil des Gegengewichts ist somit multifunktional.

Nach einer weiteren Ausführungsform ist zumindest ein Teil des Gegengewichts von einem Funktionsteil gebildet, das einen unter Druck setzbaren Innenraum der Messeraufnahme begrenzt. Das Gegengewicht bildet somit insbesondere zumindest einen Teil einer Druckkammer der Messeraufnahme.

Die Erfindung betrifft zudem einen, insbesondere erfindungsgemäßen, Messerkopf eines Hochleistungsslicers oder einen Hochleistungsslicer, mit einem erfindungsgemäßen System.

Schließlich wird auch auch ein System mit einem Messerkopf eines Hochleistungsslicers oder einem Hochleistungsslicer und einer Handhabungsvorrichtung offenbart.

Die Erfindung wird im Folgenden beispielhaft unter Bezugnahme auf die Zeichnungen beschrieben. Es zeigen:
- Fig. 1: eine Seitenansicht eines Ausführungsbeispiels eines erfindungsgemäßen Messers,
- Fig. 2: eine Seitenansicht eines Ausführungsbeispiels einer Messeraufnahme,
- Fig. 3: eine Seitenansicht eines Ausführungsbeispiels, bei dem das Messer in einer Messeraufnahme aufgenommen ist,
- Fig. 4: eine Schnittansicht des Ausführungsbeispiels gemäß Fig. 3,
- Fig. 5: eine weitere Seitenansicht des Ausführungsbeispiels gemäß Fig. 3,
- Fig. 6: eine Draufsicht des Ausführungsbeispiels gemäß Fig. 3,
- Fig. 7: eine weitere Schnittansicht des Ausführungsbeispiels gemäß Fig. 3,
- Fig. 8: eine vergrößerte Teildarstellung des Ausführungsbeispiels gemäß Fig. 7, und
- Fig. 9: eine Schnittansicht eines zweiten Ausführungsbeispiels einer Messeraufnahme samt Messer.

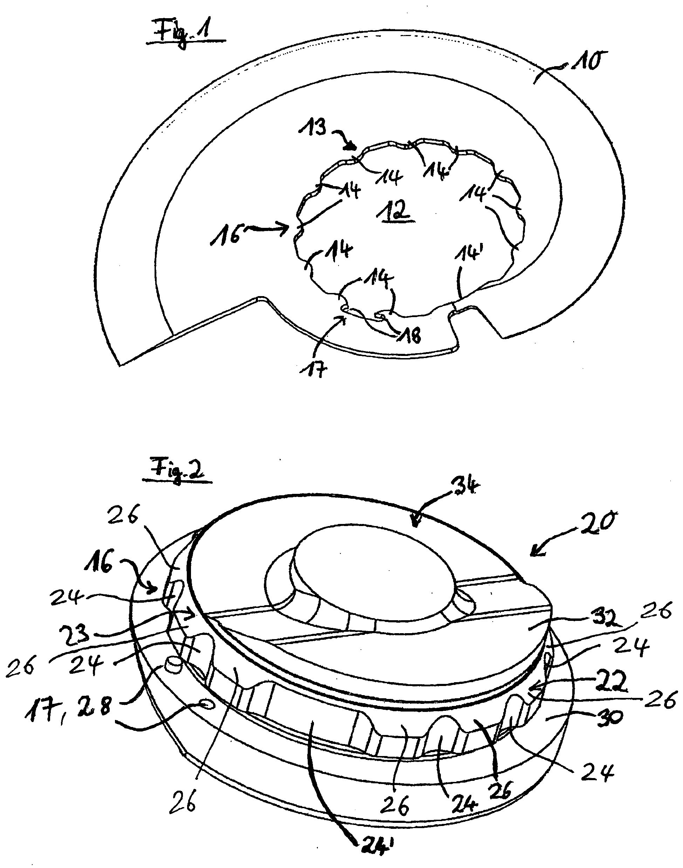

Fig. 1 zeigt ein Sichelmesser 10 mit einer großen, zentralen Befestigungsöffnung 12. Die Befestigungsöffnung 12 ist größer als beispielsweise ein Loch zur Hindurchführung einer herkömmlichen Befestigungsschraube. Die Befestigungsöffnung 12 ist im Wesentlichen kreisförmig, kann jedoch auch beispielsweise als Oval, Rechteck oder Vieleck ausgebildet sein. Der Radius der Befestigungsöffnung 12 kann mindestens z.B. 1/10 des größten Radius des Sichelmessers 10 betragen. Die Befestigungsöffnung 12 kann jedoch auch deutlich größer sein, sodass gegebenenfalls nur ein vergleichsweise kleiner, die Schneidkante umfassender Rand des Sichelmessers 10 übrig bleibt. Die Fläche oder Größe der Befestigungsöffnung 12 kann beispielsweise mindestens ein Sechstel der Fläche des Sichelmessers 10 einnehmen.

Der Rand der Befestigungsöffnung 12 ist "ausgefranst" ausgebildet. Insbesondere hat dieser eine Mäanderform. Der Rand der Befestigungsöffnung 12 kann wellenförmig ausgebildet sein. Alternativ kann dieser sternförmig oder beispielsweise nach Art einer Rändelschraube ausgestaltet sein. Auch andere Formen sind denkbar.

Es wechseln sich somit Abschnitte, die weiter in das Zentrum des Sichelmessers 10 hineinragen, mit Abschnitten ab, welche weniger weit in das Zentrum des Sichelmessers 10 hinein vorstehen. Das Messer 10 hat somit eine nach innen gerichtete, nichtkreisförmige Kontur. Die Abschnitte, also Messervorsprünge 14, 14', welche weiter in das Zentrum des Sichelmessers 10 ragen, können als Laschen 14, 14' ausgebildet sein. Diese können beispielsweise rund oder eckig ausgeführt sein. Die nach innen gerichteten Vorsprünge 14, 14' können dieselbe Dicke aufweisen wie ein an den Randbereich angrenzender Messerinnenbereich. Alternativ könnten diese jedoch auch abgeflacht ausgebildet und beispielsweise dünner sein als der restliche Teil des Messers, welcher an die Befestigungsöffnung 12 angrenzt.

Die Messervorsprünge 14, 14' bilden einen Teil eines Bajonettverschlusses 16. Es ist auch denkbar, mehrere Bajonettverschlüsse 16 anzuordnen.

Zwei der Messervorsprünge 14 bilden eine Verdehsicherung 17. Diese verfügt über zwei Aussparungen 18, welche auch als eine Aussparung 18 mit zwei in Wirkverbindung stehenden Endbereichen angesehen werden kann.

Alternativ ist auch denkbar, lediglich eine Aussparung 18 für die Verdrehsicherung 17 zu verwenden. Auch mehrere Aussparungen 18 sind denkbar. Während der restliche Randbereich der Befestigungsöffnung 12, insbesondere die Laschen 14, in Umfangsrichtung gesehen symmetrisch ausgebildet sind, ist eine Lasche 14' deutlich größer. Die Lasche 14' bildet gewissermaßen ein offenes Oval. An der Stelle weist der Rand der Befestigungsöffnung 12 somit eine Asymmetrie auf.

Fig. 2 zeigt eine Messeraufnahme 20. Diese hat einen Ring 22, welcher einen Aufnahmerandbereich 22 bildet. Der Aufnahmerandbereich 22 dient auch als Befestigungsabschnitt 22 für das Sichelmesser 10. Der Ring 22 ist drehfest mit einem Deckel 34 verbunden und bildet mit diesem einen ersten Teil 23 der Messeraufnahme 20. Dieser erste Teil 23 ist gegenüber einem zweiten Teil 30 der Messeraufnahme 20, welcher einen Anlageabschnitt 30 für das Messer 10 umfasst, axial beweglich.

Der Ring 22 weist insbesondere Vertiefungen 24, 24' und Aufnahmevorsprünge 26 ("Zähne") auf, welche sich abwechseln. Diese sind derart geformt, dass sie dem Messerrandbereich 13 gemäß Fig. 1 entsprechen. Der Ring 22 stellt gewissermaßen das "Positiv" des "Negativs" des Randes der Befestigungsöffnung 12 dar, d.h. der Messerrandbereich 13 und der Ring 22 sind komplementär zueinander ausgebildet.

Insbesondere kann der Ring 22 mindestens eine Vertiefung 24' aufweisen, welche sich über einen längeren Abschnitt des Ringumfangs als die restlichen Vertiefungen 24 erstreckt. Die Vertiefung 24' kann insbesondere die Lasche 14' aufnehmen. Denkbar sind auch mehrere Vertiefungen 24', welche beispielsweise mehrere Laschen 14' aufnehmen können. Um das Messer 10 auf die Messeraufnahme 20 aufzusetzen, muss das Messer 10 somit an die korrekte Winkelposition gebracht werden.

Die Messeraufnahme 20 weist mindestens einen Sicherungsstift 28 auf, der in die Verdrehsicherung 17 formschlüssig eingreift. Vorzugsweise sind zwei Stifte 28 vorgesehen, von denen beispielsweise einer beweglich und einer feststehend ausgebildet ist. Die Stifte 28 gelangen mit den Aussparungen 18 der Verdrehsicherung 17 in Eingriff.

Das Sichelmesser 10 wird also beispielsweise mittels einer Handhabungsvorrichtung auf die Messeraufnahme 20 aufgesetzt. Das Sichelmesser 10 wird hierbei derart verdreht, bis die Laschen 14, 14' der Position der Vertiefungen 24, 24' entsprechen. Das Sichelmesser 10 wird nun über den Ring 22 geschoben, bis es auf eine Auflage 30 bzw. einen Träger 30 des zweiten Teils 30 der Messeraufnahme 20 auftrifft. Nach Passieren des Rings 22 kann das Sichelmesser 10 wieder verdreht werden. Das Sichelmesser 10 wird entgegen der Drehrichtung im Schneidbetrieb verstellt. Schließlich rastet das Sichelmesser 10 beispielsweise über einen Sicherungsstift 28 ein und wird somit an einem Verdrehen gehindert. Damit ist das Sichelmesser 10 eindeutig positioniert.

Durch das Verdrehen befinden sich die Laschen 14, 14' nun unterhalb der Vorsprünge 26 der Messeraufnahme 20. Das Messer 10 mit seiner nach innen gerichteten Kontur liegt somit unterhalb der Vorsprünge 26 und wird auf diese Weise an einer axialen Bewegung gehindert.

Zumindest einer der Stifte 28 kann dabei feststehend ausgebildet sein, während der andere beispielsweise über eine Feder vorgespannt sein kann und nach oben springt, wenn sich eine Aussparung 18 des Sichelmessers 10 darüber befindet.

Die Betätigung zumindest eines der Stifte 28 kann z.B. über die erwähnte Handhabungsvorrichtung des Messers 10 erfolgen.

In Fig. 2 ist zudem ein Gegengewicht 32 gezeigt. Dieses äußere Gegengewicht 32 kann beispielsweise zumindest teilweise in die Messeraufnahme 20 integriert sein. Bei dem Ausführungsbeispiel gemäß Fig. 2 ist das Gegengewicht 32 vollständig in die Messeraufnahme 20 integriert. Das Gegengewicht 32 kann beispielsweise einen Teil des Deckels 34 bilden.

Die Form des Gegengewichts 32 kann von der in Fig. 2 dargestellten Form abweichen. Beispielsweise kann das Gegengewicht 32 auf der großen Sichelseite des Sichelmessers 10 abgeflacht sein. Es ist auch denkbar, dass die Geometrie der Messeraufnahme 20 selbst auf der großen Sichelseite abgeflacht ist.

Da das Gegengewicht 32 nicht am oder vor dem Sichelmesser 10 montiert ist, muss das Gegengewicht bei einem Austauschen des Sichelmessers 10 nicht demontiert werden.

Durch das Gegengewicht 32 kann die Massenverteilung eingestellt werden. Insbesondere ist dadurch eine Auswuchtung des rotierenden Gesamtsystems möglich. Eine statische Auswuchtung bezüglich der Drehachse ist hierdurch generell gewährleistet. Auch einer dynamischen Unwucht wird durch die hier vorgesehene Anordnung des Gegengewichts 32 entgegnet.

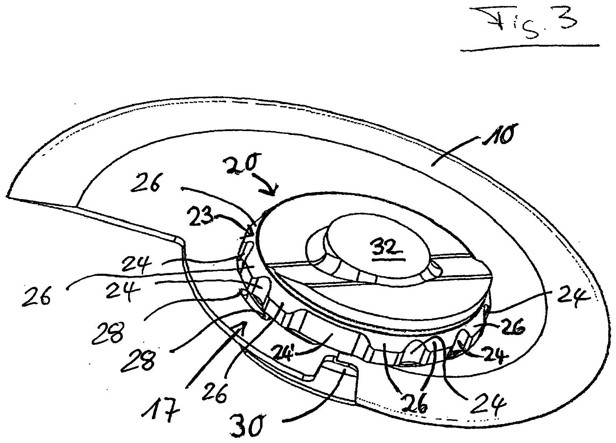

Fig. 3 zeigt das Sichelmesser 10 gemäß Fig. 1 im auf der Messeraufnahme 20 gemäß Fig. 2 angebrachten Zustand. Durch das Aufsetzen, Verdrehen und anschließende Einrasten der Stifte 28 in die Verdrehsicherung 17 ist das Sichelmesser 10 in dieser Position sicher fixiert.

Die Messeraufnahme 20 verriegelt mit ihrer Gegenkontur, d.h. den Vorsprüngen 26, die Kontur, d.h. die Laschen 14, 14', des Messers 10. Durch diesen Bajonettverschluss 16 wird eine axiale Bewegung des Sichelmessers 10 verhindert.

Zur endgültigen Befestigung des Sichelmessers 10 kann die Messeraufnahme 20 die Laschen 14, 14' des Sichelmessers 10 einklemmen. Dies ist beispielsweise mithilfe von Schrauben innerhalb der Messeraufnahme 20 möglich. Alternativ können auch Federn, welche selbst mit Schrauben gespannt werden, zur Klemmung der Laschen 14, 14' verwendet werden.

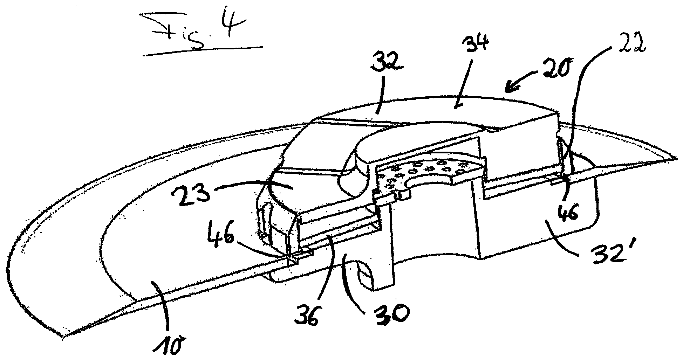

Zur Befestigung der Laschen 14, 14' ist alternativ oder zusätzlich auch eine Tellerfeder oder ein Tellerfederpaket 36 als Federanordnung 36 denkbar, welche in Fig. 4 gezeigt ist. Die Tellerfedern 36 sind derart vorgespannt, dass das Messer 10 im Normalzustand eingeklemmt ist. Sobald sich das Sichelmesser 10 in der richtigen Position auf der Messeraufnahme 20 befindet, d.h. insbesondere nach dem Einrasten der Stifte 28, kann die Tellerfeder 36 die Laschen 14, 14' des Sichelmessers 10 beaufschlagen und das Messer 10 fixieren.

Das Messer 10 ist somit zwischen dem ersten Teil 23 und dem zweiten Teil 30 der Messeraufnahme 20 eingeklemmt.

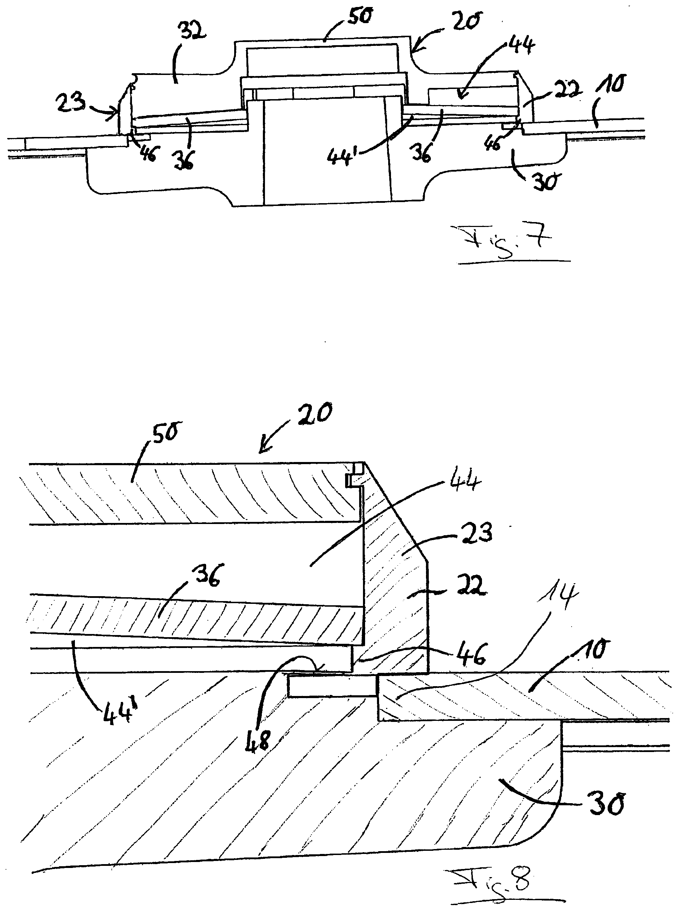

Die Tellerfeder 36 kann z.B. direkt die Laschen 14, 14' des Sichelmessers 10 beaufschlagen. Vorzugsweise wirkt die Tellerfeder 36 jedoch nur mittelbar über eine Innenseite des Aufnahmerandbereichs 22. Diese kann einen Innenvorsprung 46 aufweisen, der zwischen der Tellerfeder 36 und den Laschen 14, 14' des Sichelmessers 10 angeordnet ist. Dieser ist vergrößert in Fig. 8 dargestellt. Die Zungen 14, 14' des Messers 10 werden somit über den Ring 22 mithilfe der Tellerfeder 36 beaufschlagt.

Dadurch, dass die Laschen 14, 14' des Sichelmessers 10 aufgrund der Vorspannung der Tellerfeder 36 permanent beaufschlagt werden, ist das Sichelmesser 10 permanent fixiert.

Zur Abnahme des Sichelmessers 10 von der Messeraufnahme 20 muss die Klemmung aktiv überwunden werden. Sollte die hierzu verwendete Betätigungseinrichtung ausfallen, ist trotzdem eine sichere Klemmung des Messers 10 gewährleistet (Sicherheitsklemmung).

In Fig. 4 ist zudem dargestellt, dass an beiden Seiten der Messerebene Gegengewichte 32, 32' angeordnet sind. Beide Gegengewichte 32, 32' sind jeweils in den Bereichen vorgesehen, welche dem kleinen Abschnitt des Sichelmessers 10 zugewandt sind.

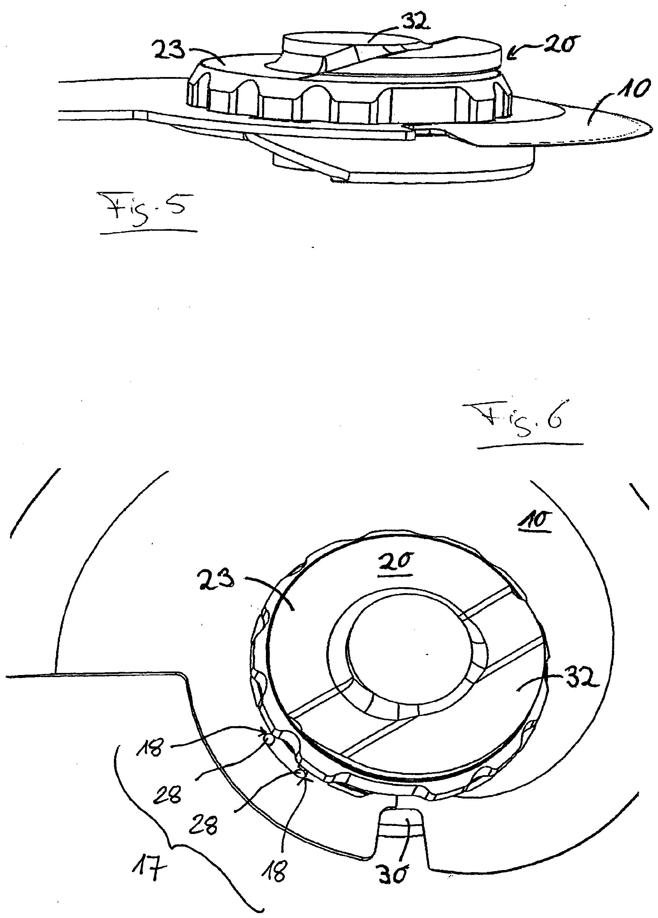

Fig. 5 und Fig. 6 zeigen zwei weitere Ansichten eines Sichelmessers 10, welches auf einer Messeraufnahme 20 montiert ist.

Eine Variante der erwähnten Sicherheitsklemmung ist in Fig. 7 und Fig. 8 dargestellt. Zum Überwinden der Klemmung wird eine Betätigungseinrichtung benötigt.

Als Betätigungseinrichtung kann beispielsweise eine Pneumatikeinrichtung vorgesehen sein. Durch den Deckel 50, der insbesondere gleichzeitig einen Teil des Gegengewichts 32 bildet, den Aufnahmerandbereich 22 sowie den Träger 30 wird dabei ein Innenraum 44, 44' abgedichtet und mit Druck beaufschlagt. Dabei wird der gesamte, die Tellerfeder 36 beinhaltende Innenraum 44, 44' unter Druck gesetzt bzw. mit einem Überdruck beaufschlagt. Die Tellerfeder 36 liegt auf einem Innenvorsprung 46 des Rings 22 auf. Zwischen dem Innenvorsprung 46 und dem Träger 30 erstreckt sich eine, insbesondere diese Komponenten einstückig verbindende, Membranhaut 48, die im Folgenden auch einfach als Membran bezeichnet wird. Diese dichtet den Innenraum 44, 44' ab und wirkt bei einer axialen Bewegung des ersten Teils 23 relativ zum zweiten Teil 30 insbesondere nach Art eines Filmscharniers. Der Ring 22, der Innenvorsprung 46, die Membran 48 sowie der Träger 30 können insbesondere als einstückiges Bauteil ausgebildet sein.

Wird der Innenraum 44, 44' mit Druck beaufschlagt, bewegt sich der Deckel 50 der Messeraufnahme 20 nach oben. Der Ring 22 wird dabei vom Deckel 50 mitgenommen und ebenfalls nach oben bewegt. Durch den Innenvorsprung 46 wird auch die Tellerfeder 36 radial außen entgegen ihrer Vorspannung nach oben bewegt und dabei stärker gespannt. Radial innen kann die Tellerfeder 36 nicht weiter nach oben gelangen, da sie an einer feststehenden Schulter anliegt.

Das Messer 10 wird dadurch frei. Die Membran 48 sorgt somit sowohl für eine Dichtigkeit des Innenraums 44, 44' als auch für die erforderliche relative Beweglichkeit der Komponenten zum Aufheben des Klemmzustandes.

Durch den Einsatz eines Pneumatiksystems werden keine Schrauben mehr benötigt, um das Messer 10 zu befestigen.

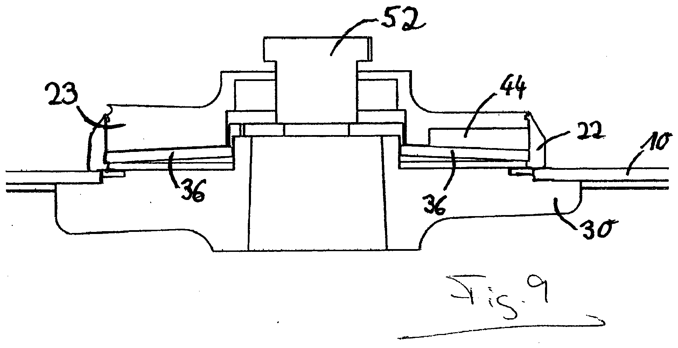

Als Alternative zu der Pneumatiklösung kann auch eine einzige Schraube 52 als Betätigungseinrichtung eingesetzt werden, welche in Fig. 9 gezeigt ist. Alternativ können auch mehrere Schrauben 52 verwendet werden. Es sind auch andere Spannelemente 52 als Betätigungseinrichtung denkbar. Durch Drehen der Spannschraube 52 wird die Tellerfeder 36 zusätzlich gespannt, indem diese über den Ring 22 nach oben gezogen wird. Der Einsatz einer Spannschraube 52 hat den Vorteil, dass dieses System besonders einfach aufgebaut ist.

Die Klemmung des Messers kann also rein mechanisch und/oder pneumatisch aktiv überwunden werden.

### Bezugszeichenliste

- 10: Sichelmesser, Messer
- 12: Befestigungsöffnung
- 13: Messerrandbereich
- 14, 14': Lasche, Zunge, Messervorsprung
- 16: Bajonettverschluss
- 17: Verdrehsicherung
- 18: Aussparung
- 20: Messeraufnahme
- 22: Ring, Aufnahmerandbereich, Befestigungsabschnitt
- 23: erster Teil
- 24, 24': Vertiefung
- 26: Aufnahmevorsprung, Vorsprung
- 28: Sicherungsstift, Stift
- 30: Auflage, Träger, Anlageabschnitt, zweiter Teil
- 32, 32': Gegengewicht
- 34: Deckel
- 36: Tellerfeder, Federanordnung
- 44, 44': Innenraum
- 46: Innenvorsprung
- 48: Membranhaut
- 50: Deckel
- 52: Schraube

## Patentansprüche

1. Sichelmesser (10) für Hochgeschwindigkeitsslicer, das so ausgebildet ist, dass es derart an einer Messeraufnahme (20) des Slicers angebracht werden kann, dass das Messer (10) zunächst in axialer Richtung auf die Messeraufnahme (20) aufgesetzt und anschließend durch Verdrehen, entweder des Messers (10) relativ zur Messeraufnahme (20) und/oder der Messeraufnahme (20) relativ zum Messer (10), an der Messeraufnahme (20) bezüglich der axialen Richtung verriegelt wird,
**dadurch gekennzeichnet, dass**
ein Messerrandbereich (13) zur Befestigung an der Messeraufnahme (20) von einer Kreisform abweicht und eine Mehrzahl von in Umfangsrichtung beabstandet angeordneten, radial nach innen gerichteten Messervorsprüngen (14, 14') umfasst,
wobei der Messerrandbereich (13) als Bestandteil einer Anbringhilfe ausgebildet ist, wobei der Messerrandbereich (13) zumindest eine, bevorzugt genau eine, Asymmetrie aufweist, an welcher der Messerrandbereich (13) von einem regelmäßigen Verlauf abweicht.

2. Sichelmesser nach Anspruch 1,
**dadurch gekennzeichnet,**
**dass** das Messer (10) in einem Messerrandbereich (13) die gleiche axiale Dicke aufweist wie in einem an den Messerrandbereich (13) angrenzenden Messerinnenbereich, wobei insbesondere der Messerrandbereich (13) an der Messerrückseite und/oder an der Messervorderseite bündig, insbesondere flächenbündig, in den Messerinnenbereich übergeht.

3. Sichelmesser nach Anspruch 1 oder 2,
**dadurch gekennzeichnet,**
**dass** der Messerrandbereich (13) mäanderförmig umläuft.

4. Sichelmesser nach einem der vorhergehenden Ansprüche,
**dadurch gekennzeichnet,**
**dass** das Messer (10) über einen Bajonettverschluss (16) mit der Messeraufnahme (20) verriegelbar ist,
wobei insbesondere der Messerrandbereich (13) als Bestandteil des Bajonettverschlusses (16) ausgebildet ist.

5. Sichelmesser nach Anspruch 4,
**dadurch gekennzeichnet,**
**dass** die radial nach innen gerichteten Messervorsprünge (14, 14') des Messerrandbereiches (13) als Bestandteil des Bajonettverschlusses (16) ausgebildet sind.

6. Sichelmesser nach einem der vorhergehenden Ansprüche,
**dadurch gekennzeichnet,**
**dass** das Messer (10) einen messerseitigen Bestandteil einer Verdrehsicherung (17) aufweist, wobei insbesondere der Bestandteil wenigstens eine Aussparung (18) umfasst, bevorzugt eine sich in Umfangsrichtung erstreckende Aussparung (18) mit zwei Endabschnitten.

7. Sichelmesser nach Anspruch 6,
**dadurch gekennzeichnet,**
**dass** die Aussparung (18) zwischen zwei in Umfangsrichtung aufeinander folgenden, radial nach innen gerichteten Messervorsprüngen (14, 14') des Messerrandbereiches (13) angeordnet ist.

8. Sichelmesser nach Anspruch 1,
**dadurch gekennzeichnet,**
**dass** die Asymmetrie von einem radial nach innen gerichteten Messervorsprung (14') gebildet ist, der sich hinsichtlich seiner Form und/oder Größe von anderen radial nach innen gerichteten Messervorsprüngen (14) des Messerrandbereiches (13) unterscheidet.

9. Sichelmesser nach einem der vorhergehenden Ansprüche,
**dadurch gekennzeichnet,**
**dass** eine Befestigungsöffnung (12) eine kreisförmige Grundform aufweist, wobei eine Mittelachse der Befestigungsöffnung (12) mit einer Drehachse des Messers (10) zusammenfällt.

10. Sichelmesser nach einem der vorhergehenden Ansprüche,
**dadurch gekennzeichnet,**
**dass** der Radius einer Befestigungsöffnung (12) wenigstens 1/10 des größten Radius des Messers (10) beträgt, und/oder dass die Fläche der Befestigungsöffnung (12) wenigstens 1/6 der Gesamtfläche des Messers (10) beträgt.

11. System mit einem Sichelmesser (10) nach einem der Ansprüche 1 bis 10 und einer Messeraufnahme (20), die so ausgebildet ist, dass das Messer (10) derart daran angebracht werden kann, dass das Messer (10) zunächst in axialer Richtung auf die Messeraufnahme (20) aufgesetzt und anschlie-ßend durch Verdrehen, entweder des Messers (10) relativ zur Messeraufnahme (20) und/oder der Messeraufnahme (20) relativ zum Messer (10), an der Messeraufnahme (20) bezüglich der axialen Richtung verriegelt wird, wobei insbesondere die Messeraufnahme (20) einen Befestigungsabschnitt (22) für eine Befestigungsöffnung (12) des Messers (10) aufweist, der von einem Aufnahmerandbereich (22) begrenzt ist.

12. System nach Anspruch 11,
**dadurch gekennzeichnet,**
**dass** ein Aufnahmerandbereich (22) eine größere axiale Dicke aufweist als der Messerrandbereich (13) und/oder
**dass** ein Messerrandbereich (13) und ein Aufnahmerandbereich (22) derart aufeinander abgestimmt sind, dass beim Aufsetzen des Messers (10) ein Verdrehen des Messers (10) unterbunden ist, bis der Messerrandbereich (13) den Aufnahmerandbereich (22) passiert hat.

13. System nach einem der Ansprüche 11 bis 12,
**dadurch gekennzeichnet,**
**dass** ein axialer Abstand zwischen einer Anlageebene und einer Verriegelungsebene der Messeraufnahme (20) zumindest in einem Freigabezustand der Messeraufnahme (20) größer ist als die axiale Dicke des eine Befestigungsöffnung (12) begrenzenden Messerrandbereiches (13),
wobei insbesondere der axiale Abstand kleiner als 1mm ist, insbesondere kleiner als 0,5mm, bevorzugt kleiner als 0,3mm und vorzugsweise kleiner als 0,1mm.

14. Messerkopf eines Hochleistungsslicers oder Hochleistungsslicer, mit einem System nach einem der Ansprüche 11 bis 13.

## Claims

1. A scythe-like blade (10) for high-speed slicers which is configured such that it can be attached to a blade mount (20) of the slicer such that the blade (10) is first set onto the blade mount (20) in an axial direction and is subsequently locked with respect to the axial direction at the blade mount (20) by rotation of either the blade (10) relative to the blade mount (20) and/or of the blade mount (20) relative to the blade (10),
**characterized in that**
a marginal blade region (13) for fastening at the blade mount (20) differs from a circular shape and comprises a plurality of blade projections (14, 14') arranged spaced apart in the peripheral direction and directed radially inwardly,
with the marginal blade region (13) being configured as a component of an attachment aid, with the marginal blade region (13) having at least one, preferably exactly one, asymmetrical portion at which the marginal blade region (13) differs from a regular extent.

2. A scythe-like blade in accordance with claim 1,
**characterized in that**
the blade (10) has the same axial thickness in a marginal blade region (13) as in an inner blade region adjacent to the marginal blade region (13), with the marginal blade region (13) in particular merging in a flush manner into the inner blade region at the rear blade side and/or at the front blade side, in particular flush with the adjacent areas.

3. A scythe-like blade in accordance with claim 1 or claim 2, **characterized in that**
the marginal blade region (13) runs around in a meandering form.

4. A scythe-like blade in accordance with any one of the preceding claims,
**characterized in that**
the blade (10) can be locked to the blade mount (20) via a bayonet fastening (16),
with the marginal blade region (13) in particular being configured as a component of the bayonet fastening (16).

5. A scythe-like blade in accordance with claim 4,
**characterized in that**
the radially inwardly directed blade projections (14, 14') of the marginal blade region (13) are configured as a component of the bayonet fastening (16).

6. A scythe-like blade in accordance with any one of the preceding claims,
**characterized in that**
the blade (10) has a blade-side component of a security against rotation (17), with the component in particular comprising at least one cut-out (18), preferably a cut-out (18) extending in the peripheral direction and having two end sections.

7. A scythe-like blade in accordance with claim 6,
**characterized in that**
the cut-out (18) is arranged between two blade projections (14, 14') of the marginal blade region (13) which follow one another in the peripheral direction and which are directed radially inwardly.

8. A scythe-like blade in accordance with claim 1,
**characterized in that**
the asymmetrical portion is formed by a radially inwardly directed blade projection (14') which differs with respect to its shape and/or size from other radially inwardly directed blade projections (14) of the marginal blade region (13).

9. A scythe-like blade in accordance with any one of the preceding claims,
**characterized in that**
a fastening opening (12) has a circular basic shape, with a central axis of the fastening opening (12) coinciding with an axis of rotation of the blade (10).

10. A scythe-like blade in accordance with any one of the preceding claims,
**characterized in that**
the radius of a fastening opening (12) amounts to at least 1/10 of the greatest radius of the blade (10); and/or **in that** the area of the fastening opening (12) amounts to at least 1/6 of the total area of the blade (10).

11. A system having a scythe-like blade (10) in accordance with any one of the claims 1 to 10 and having a blade mount (20) which is configured such that the blade (10) can be attached thereto such that the blade (10) is first set onto the blade mount (20) in an axial direction and is subsequently locked with respect to the axial direction at the blade mount (20) by rotation of either the blade (10) relative to the blade mount (20) and/or of the blade mount (20) relative to the blade (10),
wherein the blade mount (20) in particular has a fastening section (22) for a fastening opening (12) of the blade (10) which is bounded by a marginal mount region (22).

12. A system in accordance with claim 11,
**characterized in that**
a marginal mount region (22) has a larger axial thickness than the marginal blade region (13); and/or
**in that** a marginal blade region (13) and a marginal mount region (22) are coordinated with one another such that, on setting on the blade (10), a rotation of the blade (10) is suppressed until the marginal blade region (13) has passed the marginal mount region (22).

13. A system in accordance with one of the claims 11 to 12,
**characterized in that**
an axial spacing between a contact plane and a locking plane of the blade mount (20) is larger in at least a release state of the blade mount (20) than the axial thickness of the marginal blade region (13) bounding a fastening opening (12),
with the axial spacing in particular being smaller than 1 mm, in particular smaller than 0.5 mm, preferably smaller than 0.3 mm, and preferentially smaller than 0.1 mm.

14. A blade head of a high-performance slicer or a high-performance slicer having a system in accordance with any one of the claims 11 to 13.

## Revendications

1. Couteau de type faucille (10) pour trancheuse à haute vitesse, qui est ainsi réalisé qu'il peut être monté sur un récepteur de couteau (20) de la trancheuse de telle façon que le couteau (10) est tout d'abord posé en direction axiale sur le récepteur de couteau (20) et est ensuite verrouillé sur le récepteur de couteau (20) par référence à la direction axiale par rotation du couteau (10) par rapport au récepteur de couteau (20) et/ou du récepteur de couteau (20) par rapport au couteau (10),
**caractérisé en ce que**
une zone de bordure (13) du couteau destinée à la fixation sur le récepteur de couteau (20) a une forme qui s'écarte d'une forme circulaire et inclut une pluralité de saillies de réception de couteau (14, 14') agencées à distance en direction périphérique et orientées radialement vers l'intérieur, et
la zone de bordure (13) du couteau est réalisée à titre d'élément constitutif d'un accessoire de montage, dans lequel la zone de bordure (13) du couteau présente au moins une, et de préférence exactement une, asymétrie, au niveau de laquelle la zone de bordure (13) du couteau s'écarte d'un tracé régulier.

2. Couteau de type faucille selon la revendication 1,
**caractérisé en ce que** le couteau (10) présente, dans une zone de bordure (13) la même épaisseur axiale qu'une zone intérieure du couteau adjacente à la zone de bordure (13), et en particulier la zone de bordure (13) du couteau se transforme, sur le côté postérieur et/ou sur le côté antérieur du couteau, en affleurement, et en particulier en affleurement surfacique, vers la zone intérieure du couteau.

3. Couteau de type faucille selon la revendication 1 ou 2,
**caractérisé en ce que** la zone de bordure (13) du couteau a une circonférence en forme de méandres.

4. Couteau de type faucille selon l'une des revendications précédentes, **caractérisé en ce que**
le couteau (10) est susceptible d'être verrouillé avec le récepteur de couteau (20) au moyen d'une fermeture à baïonnette (16),
et en particulier la zone de bordure (13) du couteau est réalisée comme élément constitutif de la fermeture à baïonnette (16).

5. Couteau de type faucille selon la revendication 4,
**caractérisé en ce que** les saillies (14, 14') du couteau, dirigées radialement vers l'intérieur, de la zone de bordure (13) du couteau sont réalisées à titre d'élément constitutif de la fermeture à baïonnette (16).

6. Couteau de type faucille selon l'une des revendications précédentes, **caractérisé en ce que** le couteau (10) comprend un élément constitutif, côté couteau, d'un blocage antirotation (17), et ledit élément constitutif inclut en particulier au moins une échancrure (18), de préférence une échancrure (18) qui s'étend en direction périphérique, avec deux portions terminales.

7. Couteau de type faucille selon la revendication 6,
**caractérisé en ce que** l'échancrure (18) est agencée entre deux saillies (14, 14'), qui se suivent mutuellement en direction périphérique et qui sont orientées radialement vers l'intérieur, de la zone de bordure (13) du couteau.

8. Couteau de type faucille selon la revendication 1,
**caractérisé en ce que** l'asymétrie est formée par une saillie (14') du couteau dirigée radialement vers l'intérieur et qui diffère quant à sa forme et/ou à sa taille d'autres saillies (14) du couteau dirigées radialement vers l'intérieur dans la zone de bordure (13) du couteau.

9. Couteau de type faucille selon l'une des revendications précédentes, **caractérisé en ce qu'**une ouverture de fixation (12) présente une forme de base circulaire, dans laquelle un axe médian de l'ouverture de fixation (12) coïncide avec un axe de rotation du couteau (10).

10. Couteau de type faucille selon l'une des revendications précédentes, **caractérisé en ce que** le rayon d'une ouverture de fixation (12) s'élève à au moins 1/10 du plus grand rayon du couteau (10), et/ou **en ce que** la surface de l'ouverture de fixation (12) s'élève à au moins 1/6 de la surface totale du couteau (10).

11. Système comprenant un couteau de type faucille (10) selon l'une des revendications 1 à 10, et un récepteur de couteau (20) qui est ainsi réalisé que le couteau (10) peut être monté sur celui-ci de telle façon que le couteau (10) est tout d'abord posé sur le récepteur de couteau (20) en direction axiale et est ensuite verrouillé sur le récepteur de couteau (20) par référence à la direction axiale par rotation du couteau (10) par rapport au récepteur de couteau (20) et/ou du récepteur de couteau (20) par rapport au couteau (10),
dans lequel en particulier le récepteur de couteau (20) comprend une portion de fixation (22) pour une ouverture de fixation (12) du couteau (10), qui est délimitée par une zone de bordure (22) du récepteur.

12. Système selon la revendication 11,
**caractérisé**
**en ce qu'**une zone de bordure (22) du récepteur présente une épaisseur axiale plus élevée que la zone de bordure (13) du couteau, et/ou
**en ce qu'**une zone de bordure (13) du couteau et une zone de bordure (22) du récepteur sont accordées l'une à l'autre de telle façon qu'en posant le couteau (10) une rotation du couteau (10) est empêchée jusqu'à ce que la zone de bordure (13) du couteau ait dépassé la zone de bordure (22) du récepteur.

13. Système selon l'une des revendications 11 à 12,
**caractérisé en ce qu'**une distance axiale entre un plan d'appui et un plan de verrouillage du récepteur de couteau (20), au moins dans un état de libération du récepteur de couteau (20), est plus grande que l'épaisseur axiale de la zone de bordure (13) du couteau délimitant une ouverture de fixation (12),
dans lequel en particulier la distance axiale est plus petite que 1 mm, en particulier plus petite que 0,5 mm, de préférence plus petite que 0,3 mm, et de manière préférée plus petite que 0,1 mm.

14. Tête de couteau d'une trancheuse à haute vitesse, ou trancheuse à haute vitesse, comprenant un système selon l'une des revendications 11 à 13.
